# EUROPEAN PATENT APPLICATION

(11) **EP 3 968 501 A1**
(43) Date of publication of application: **16.03.2022**
(21) Application number: 20852745.7
(22) Date of filing: 10.04.2020
(51) Int. Cl.: H02K 9/08, H02K 1/18, H02K 1/20

(54) **STATOR BLOCK, STATOR ASSEMBLY, AND COOLING SYSTEM FOR STATOR ASSEMBLY**

(30) Priority: 14.08.2019 CN 201910755941
(71) Applicant: Shanghai Electric Wind Power Group Co., Ltd., Shanghai 200241 (CN)
(72) Inventor: SUN, Yonggang, Shanghai 200233 (CN); JIN, Xiaolong, Shanghai 200233 (CN); MIAO, Jun, Shanghai 200233 (CN); CUI, Ming, Shanghai 200233 (CN); LU, Jiangyue, Shanghai 200233 (CN); SHI, Yang, Shanghai 200233 (CN); CHEN, Jian, Shanghai 200233 (CN); WANG, Haiyang, Shanghai 200233 (CN)
(74) Representative: Bandpay & Greuter
(86) International application number: PCT/CN2020/084248
(87) International publication number: WO 2021/027301

(57) **Abstract**

The present disclosure provides a stator block, a stator assembly, and a cooling system for a stator assembly. The stator block includes: a block body, where a cooled air outlet is disposed on an axial side surface of the block body; a stator iron core, connected to a radial outer end surface of the block body; and a cooling unit, disposed inside the block body, where the cooling unit introduces hot air from the stator iron core and expels the cooled air from the cooled air outlet. The present disclosure improves the assembly efficiency; under a same discharge capacity, an air flow circulation path is shortened, a cooling circulation speed of an air flow is sped up and the cooling effect is improved; with sharing of redundant cooling, economic benefits are improved; with separation of a maintenance region and an electromagnetic region, operation and maintenance safety of the generator is improved, the structure is simplified, conveniences are provided to maintenance personnel for entry and exit, and the influence of the heat generated by the electromagnetic region on a main bearing is reduced, thus helping manufacture of the stator support.

## Description

### CROSS REFERENCE TO RELATED APPLICATIONS

This application claims priority to Chinese Patent Application No. 2019107559419 filed on August 14, 2019, the entire content of which is incorporated herein by reference.

### TECHNICAL FIELD

The present disclosure relates to a stator block, a stator assembly and a cooling system for the stator assembly.

### BACKGROUND

A direct-drive wind power generator mainly includes a stator, a rotor, a fixed shaft, a rotary shaft, a braking system, and a cooling unit. Based on rotary components, the direct-drive wind power generators are divided into an inner rotor type and an outer rotor type. In order to ensure that the direct-drive wind power generator works normally, it is required to cool key components such as stator iron cores and magnetic poles of the generator in a proper cooling manner, so to avoid failure of the generator unit arising from excessively high temperature. A common cooling manner is as follows: a cooling device passes a cooled air flow through a cavity formed by a rotor house and a stator to a stator iron core to carry away heat on a surface of the stator iron core and then repeats the above steps to control a temperature of the generator within a reasonable range.

For example, an arrangement form of a cooling unit is provided by "cooling device and direct-drive wind turbine" with publication number CN205864119U and has the following major protective points and advantages: an air channel is disposed to provide good cooling effect for windings at both ends of a stator iron core. But, the solution generally has the following defects.
1. The cavity formed by the rotor house and the stator extends to a fixed shaft, leading to an excessively large space of the cavity. When the cooling device has a constant flow rate, the larger the space is, the slower the circulation speed is, and the poorer the cooling effect is.
2. The entire cavity inside the stator from the stator iron core to the fixed shaft is not partitioned, and the cooling device and its accessories including pipes and the like are directly mounted in the entire interior cavity. Maintenance personnel cannot easily go through the stator and enter the cavity formed by the rotor house and the stator so to repair a main bearing and other components, thus occupying a maintenance space.
3. The entire cavity inside the stator from the stator iron core to the fixed shaft is not partitioned, and a manhole on the stator needs to be covered with a sealing plate during normal operation of the generator unit to prevent the air flow channel from being damaged. Upon maintenance, the sealing plate needs to be dismounted for the personnel entering and perform maintenance, bringing a poor operability.
4. The cavity from the stator iron core to the fixed shaft is not partitioned, and when repairing the cooling device and other parts in the cavity of the stator, small parts such as bolts and washers are easily fallen towards the iron core. Further, the ferrite parts such as bolts and washers are very easily adsorbed by the magnetic pole to enter an air gap between the stator iron core and the magnetic pole, leading to a severe potential safety hazard.
5. As the temperature of the stator iron core of the generator is far higher than a working temperature of the main bearing, due to communication between a main bearing and the cavity formed by the rotor house and the stator, the main bearing will be affected to some extent.

### SUMMARY

In order to solve the problems of inconvenience of maintenance for cooling unit of a direct-drive wind power generator, presence of potential safety hazards, and large influence of heat generation of a generator on a bearing in the prior art, the present disclosure provides a stator block, a stator assembly and a cooling system for a stator assembly.

The present disclosure solves the above technical problems by employing the following technical solution.

A stator block is disclosed as including:
a block body, having two axial end plates, and a lateral end plate located between the two axial end plates, where a receiving cavity is enclosed and formed by the axial end plates and the lateral end plate, and a cooled air outlet is disposed on the axial end plate; and
a stator iron core unit, connected to a radial outer end surface of the block body,
where, at least one cooling unit is disposed inside the receiving cavity of the block body, and hot air heated by the stator iron core unit is introduced into the cooling unit in which the hot air is cooled and then expelled from the cooled air outlet.

In this solution, firstly, the cooling unit is modular designed and assembled, such that sub-unit assemblies of the cooling unit are integrated in the stator block and then an entire system integration can be performed after the cooling unit is modular assembled with the stator block, thus improving the assembly efficiency.

Secondly, this solution achieves directional cooling. The cooling unit is integrated in the stator block to carry away hot air heated by the stator iron core unit closely, and then the cooled air flows back to an air gap between the stator and the rotor and the stator iron core unit through the cooled air outlet reserved on the stator block. Under a same discharge capacity, the arrangement solution shortens an air flow circulation path, speeds up a cooling circulation speed of an air flow and improves the cooling effect.

Thirdly, a separation of a maintenance region from an electromagnetic region is realized in this solution. The cooling unit is integrated in the stator block to partition a channel between the stator block and the stator support, that is, a closed isolation of a maintenance space inside the generator from the stator iron core unit and a rotor magnetic pole of the generator is realized. In this way, small parts such as foreign matters, bolts, and maintenance tools are prevented from falling between the stator iron core unit and the rotor magnetic pole, thus protecting the generator from being damaged and improving the operation and maintenance safety of the generator.

Because the cooling channel between the stator block and the stator support is partitioned, a manhole on the stator support does not need to be sealed up with a cover plate, that is, the sealing cover plate on the manhole may be cancelled. Thus, the structure is simplified and conveniences are provided to the maintenance personnel for entry and exit.

The integration of the cooling unit in the stator block reduces the parts in the stator support, such that the maintenance space in the stator support is increased to facilitate maintenance work for the generator. The separation of the maintenance region and the electromagnetic region reduces the influence of heat generated by the electromagnetic region on the main bearing. In a case of a given outer diameter of the stator, the stator block is properly enlarged to integrate the cooling unit. Thus, a rigidity of the stator block is increased, and a size of the stator support is reduced, thereby helping manufacture of the stator support.

Preferably, the cooling unit is connected to the axial end plate and the lateral end plate of the block body through a mounting plate in a sealed way.

Preferably, the cooling unit includes a heat exchanger and a blower, the heat exchanger is disposed as facing toward the stator iron core unit, and the heat exchanger with the blower, and the blower with the cooled air outlet both are guided and communicated through a ventilation channel.

Preferably, the heat exchanger and the blower are connected by an irregularly-shaped ventilation channel, and/or, the blower and the cooled air outlet are connected by a flared ventilation channel.

Preferably, the stator block is fan-shaped and a plurality of the stator block bodies are assembled into an annular stator ring.

Preferably, one or more air flow communication openings are opened in the lateral end plate and located radially outward of the mounting plate, and each of the air flow communication openings is in communication with a cooling region between each of the stator iron core units and each of the cooling units.

Preferably, at least two cooling units are disposed inside each of the block bodies, and cooling regions between the stator iron core unit and the at least two cooling units are mutually communicated. Two cooling units are mounted inside each of the stator blocks to cool a local region of the stator iron core unit at the same time. The cooling regions of the two cooling units are in mutual communication. When the generator works normally, two cooling units are required to work jointly to satisfy the cooling requirements of the stator iron core unit on the stator block. When one of the two cooling units fails, the other can still cool the stator iron core unit on the stator block due to communication between the cooling regions of the two cooling units. During a waiting period for maintenance, the generator can still generate power at a lower operation power, improving the economic benefits.

Preferably, the cooled air outlets connected with adjacent cooling units are respectively located on the axial end plates at both sides of the block body.

A stator assembly is disclosed as including a stator support and a plurality of stator blocks connected to the stator support.

Preferably, the stator support includes a maintenance region located inwardly from a radial inner end of the block body, and each of the stator iron core units and a rotor magnetic pole of a generator are both isolated outside the maintenance region by each of the block bodies.

Preferably, the stator assembly further includes a sealing plate located radially and inwardly from the cooled air outlet, and the sealing plate is connected between the stator support and a rotor support of the generator in a sealed way.

A cooling system for a stator assembly is disclosed as including the stator assembly, where the stator assembly includes a stator support and a plurality of stator blocks which are circumferentially-arranged and connected to a radial outer end of the stator support, the stator block is fan-shaped, a plurality of stator block bodies are assembled into an annular stator ring, each of the stator blocks includes one block body and one stator iron core unit, the block body is provide with two axial end plates and a lateral end plate located between the two axial end plates, a receiving cavity is enclosed and formed by the axial end plates and the lateral end plate, the cooling system includes at least one cooling unit disposed inside the receiving cavity of each of the stator blocks, and at least one cooled air outlet disposed on the axial end plate of each of the block bodies.

Preferably, the cooling system for the stator assembly further includes a first flow guiding unit disposed inside each of the block bodies, and the first flow guiding unit is a mounting plate for connecting the cooling unit to the axial end plate and the lateral end plate of the block body in a sealed way.

Preferably, the stator assembly further includes a second flow guiding unit which is a sealing plate located radially and inwardly from the cooled air outlet and connected between the stator support and a rotor support of a generator in a sealed way.

Preferably, at least two cooling units are disposed inside each of the block bodies, and cooling regions between the stator iron core unit and the at least two cooling units are communicated mutually.

Preferably, the stator assembly further includes one or more air flow communication openings which are opened in the lateral end plate and located radially outward of the mounting plate, and each of the air flow communication openings is in communication with a cooling region between each of the stator iron core units and each of the cooling units.

The present disclosure has the following positive progressive effects: the present disclosure improves the assembly efficiency; under a same discharge capacity, an air flow circulation path is shortened, a cooling circulation speed of an air flow is sped up and the cooling effect is improved; with sharing of redundant cooling, economic benefits are improved; with separation of the maintenance region and the electromagnetic region, operation and maintenance safety of the generator is improved, the structure is simplified, conveniences are provided to maintenance personnel for entry and exit, and the influence of the heat generated by the electromagnetic region on the main bearing is reduced, thus helping manufacture of the stator support.

### BRIEF DESCRIPTION OF THE DRAWINGS

FIG. 1 is a structural schematic diagram of a wind turbine according to a preferred embodiment of the present disclosure.
FIG. 2 is a stereoscopic structural schematic diagram of a stator block according to a preferred embodiment of the present disclosure.
FIG. 3 is an entire structural schematic diagram of a stator assembly according to a preferred embodiment of the present disclosure.
FIG. 4 is a schematic diagram of a sectional structure taken along A-A in FIG. 3.
FIG. 5 is a schematic diagram of a sectional structure taken along B-B in FIG. 3.

### DETAILED DESCRIPTION OF THE EMBODIMENTS

The present disclosure will be further described below in combination with specific embodiments and shall not be limited to these embodiments.

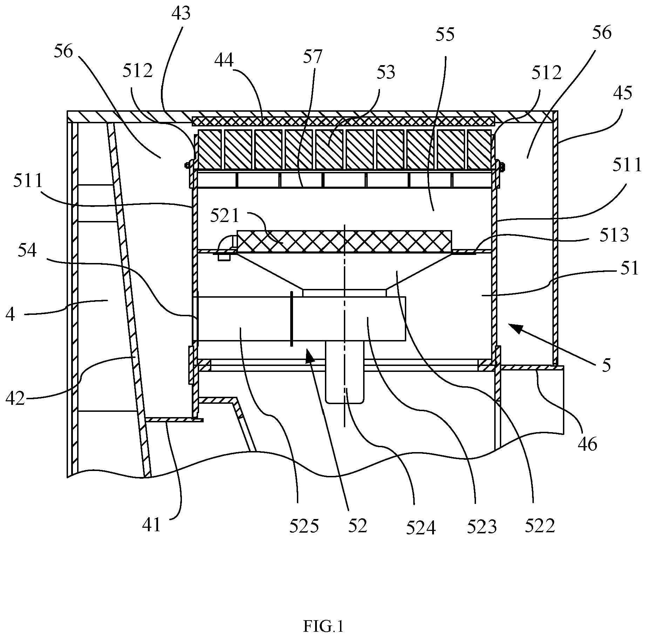

FIG. 1 is a schematic diagram of a wind turbine according to an embodiment of the present disclosure. The wind turbine includes an annular rotor assembly and an annular stator assembly. The rotor assembly includes a rotor support 4 and a rotor magnetic pole 44, and the stator assembly includes a stator support 6 and a plurality of annular segmented stator blocks 5 connected to the stator support 6. The rotor support 4 is connected to a rotary shaft 3 and the stator support 6 is connected to a fixed shaft 1. An air gap is formed between the stator block 5 and the rotor magnetic pole 44.

The rotor support 4 includes disk-like first and second rotor end plates 45 and 42, and an annular end plate 43. In this embodiment, the first rotor end plate 45 is perpendicular to a center axis of the fixed shaft 1/rotary shaft 3, and the second rotor end plate 42 extends obliquely relative to the center axis of the fixed shaft 1/rotary shaft 3. In other embodiments, the two rotor end plates may both be obliquely disposed, which is not limited herein.

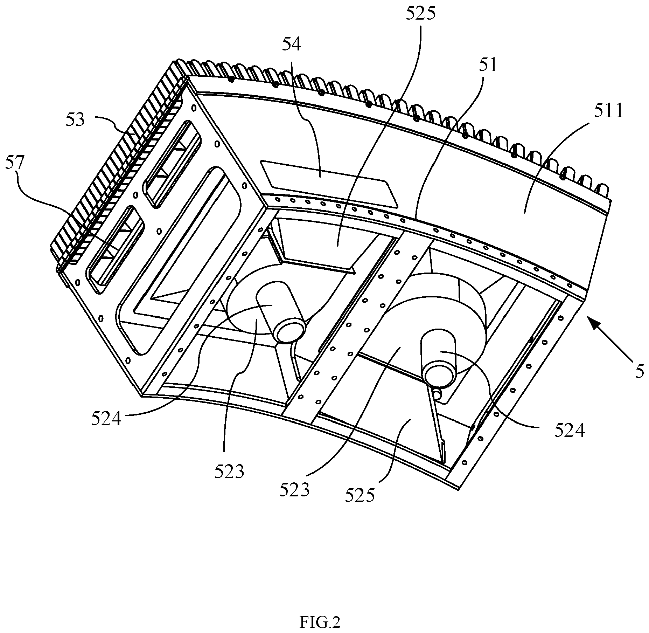

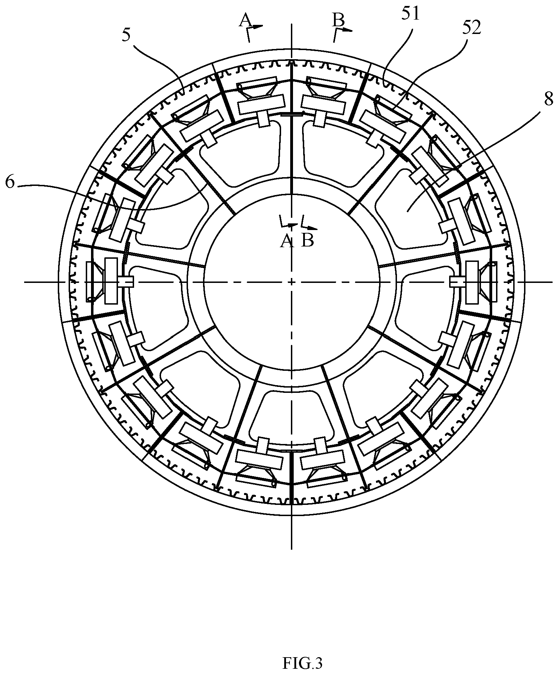

As shown in FIG. 2, in this embodiment, a single stator block 5 is fan-shaped. As shown in FIG. 3, after being assembled, the stator assembly includes nine segmented stator blocks 5 which are connected to the stator support 6 circumferentially to form an annular stator ring. Adjacent stator blocks 5 are well attached with each other. As shown in FIGS. 2 and 3, each stator block 5 includes a block body 51, a cooling unit 52 and a stator iron core unit 53. The stator iron core unit 53 has a yoke portion for defining a stator groove and a stator tooth and the stator groove is used to accommodate a winding. The stator iron core unit 53 is connected to a radial outer end surface of the block body 51. As shown in FIG. 2, the stator iron core unit 53 in this embodiment is limited and fixed by stator block support plates 512 at both sides. The block body 51 is connected between the stator iron core unit 53 and the stator support 6. The block body 51 and the stator iron core unit 53 are integrally formed into a fan-shaped structure.

With continuous reference to FIG. 2, a cavity is formed in the block body 51, and the cooling unit 52 is disposed in the cavity. The axial end plate 511 of the block body 51 is provided with a cooled air outlet 54. The axial end plates 511 of the block body 51 are two side end plates facing toward the fixed shaft 1 or the rotary shaft 3 after the block body 51 is assembled. As shown in FIG. 3, after the block bodies 51 are assembled into a ring shape, the axial end plates 511 of each block body 51 are formed into two axial end surfaces of the entire ring-shaped structure at both sides respectively.

Hot air heated by the stator iron core unit 53 is introduced into the cooling unit 52 in which the hot air is cooled and then expelled from the cooled air outlet 54. The cooling unit 52 may be an existing cooling device, especially an existing cooling device for achieving cooling by performing heat exchange with a cooling medium.

In this solution, firstly, the cooling unit 52 is modular designed and assembled, such that sub-unit assemblies of the cooling unit 52 are integrated in the stator block 5 and then an entire system integration can be performed after the cooling unit 52 is modular assembled with the stator block 5, thus improving the assembly efficiency.

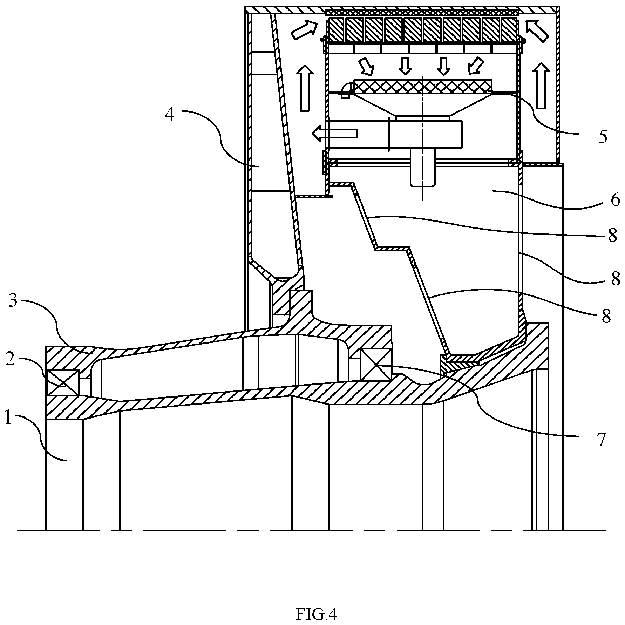

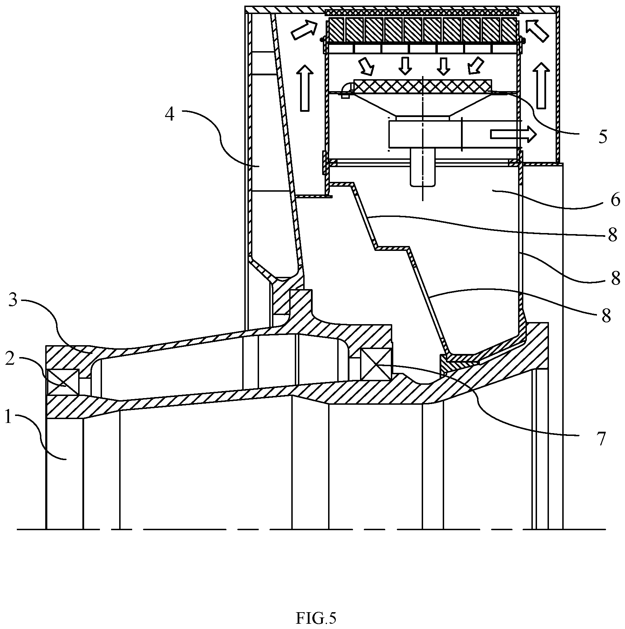

Secondly, this solution achieves directional cooling. As shown in FIGS. 4 and 5, the cooling unit 52 is integrated in the stator block 5 to carry away hot air heated by the stator iron core unit 53 closely, and then the cooled air flows back to an air gap between the stator and the rotor and the stator iron core unit 53 through the cooled air outlet 54 reserved on the stator block 5. Under a same discharge capacity, the solution shortens an air flow circulation path, speeds up a cooling circulation speed of an air flow and improves the cooling effect.

Thirdly, a separation of a maintenance region from an electromagnetic region is realized in this solution. The cooling unit 52 is integrated in the stator block 5 to partition a channel between the stator block 5 and the stator support 6, that is, a closed isolation of a maintenance space inside the generator from the stator iron core unit 53 and the rotor magnetic pole 44 of the generator is realized. In this way, small parts such as foreign matters, bolts, and maintenance tools are prevented from falling between the stator iron core unit 53 and the rotor magnetic pole 44, thus protecting the generator from being damaged and improving the operation and maintenance safety of the generator.

Because the cooling channel between the stator block 5 and the stator support 6 is partitioned, a maintenance channel 8 on the stator support 6 does not need to be sealed up with a cover plate as shown in FIGS. 3, 4 and 5, that is, the sealing cover plate on the manhole may be cancelled. Thus, the structure is simplified and conveniences are provided to the maintenance personnel for entry and exit.

The integration of the cooling unit 52 in the stator block 5 reduces the parts in the stator support 6, such that the maintenance space in the stator support 6 is increased to facilitate maintenance work for the generator. The separation of the maintenance region and the electromagnetic region reduces the influence of heat generated by the electromagnetic region on the main bearing. In a case of a given outer diameter of the stator, the stator block 5 is properly enlarged to integrate the cooling unit 52. Thus, a rigidity of the stator block 5 is increased, and a size of the stator support 6 is reduced, thereby helping manufacture of the stator support 6.

In this embodiment, the cooling unit 52 is directly or indirectly fixed in the block body 51. The block body 51 needs to be enlarged to accommodate the cooling unit 52. Thus, the rigidity of the stator block 5 is increased, and the diameter of the stator support 6 is reduced, thereby helping manufacture of the stator support 6.

As shown in FIG. 2, in this embodiment, the cooling unit 52 is fixed on the axial end plates 511 of the block body 51 through a mounting plate 513. The mounting plate 513 not only functions to fix the cooling unit 52 but also realizes isolation of a cooling region 55 spatially. In this case, the back of the stator iron core unit 53, the axial end plates 511 and the mounting plate 513 form an annular closed cooling region 55. As a result, the hot air in the cooling region 55 can flow out only through each cooling unit 52, thus limiting a flow direction of the air.

As shown in FIGS. 1 and 2, the cooling unit 52 in this embodiment includes a heat exchanger 521 and a blower 523, and the heat exchanger 521 faces toward the stator iron core unit 53. A ventilation channel is disposed for guiding and communicating between the heat exchanger 521 and the blower 523 and between the blower 523 and the cooled air outlet 54. In this embodiment, the heat exchanger 521 is further selected as an air-water heat exchanger.

As shown in FIGS. 1 and 2, the heat exchanger 521 and the blower 523 in this embodiment are connected by an irregularly-shaped ventilation channel 522. The irregularly-shaped ventilation channel 522 is vertically connected with the heat exchanger 521 and the blower 523. A side of the irregularly-shaped ventilation channel 522 facing toward the blower 523 has a smaller opening and a side of the irregularly-shaped ventilation channel 522 facing toward the heat exchanger 521 has a larger opening. In this embodiment, connection with the cooled air outlet 54 is achieved using a flared ventilation channel 525, where a side of the flared ventilation channel 525 facing toward the cooled air outlet 54 expands outwardly.

In this embodiment, the blower 523 is a centrifugal blower which is driven by a cooling motor 524. The centrifugal blower can stably suck internal hot air and have a smaller volume to facilitate its mounting. Of course, in other optional implementations, another proper existing blower may also be selected.

As shown in FIGS. 1 and 2, in the block body 51 of this embodiment, a side plate is provided between the two axial end plates 511. An air flow communication opening 57 is opened at a radial outer side of the side plate, i.e. at a position close to the stator iron core unit 53. The air flow communication opening 57 is in communication with the cooling region 55 between the stator iron core unit 53 and the cooling unit 52. The air flow communication opening 57 may be more than one disposed axially to comprehensively guide the hot air of each stator iron core unit 53 and allow the air flow to run in the annular closed cavity formed by a plurality of block bodies along a circumferential direction. An opening for assembly and maintenance is also opened at a radial inner side of the air flow communication opening 57.

In this embodiment, at least two cooling units 52 are disposed inside each block body 51, and the cooling regions 55 between the stator iron core unit 53 and each cooling unit 52 are mutually communicated. As shown in FIG. 1, in this embodiment, two cooling units 52 are mounted in each stator block 5 to cool a local region of the stator iron core unit 53 at the same time, where the cooling regions 55 of the two cooling units 52 are mutually communicated.

When the generator works normally, two cooling units 52 are required to work jointly to satisfy the cooling requirements of the stator iron core unit 53 on the stator block 5. When one of the two cooling units 52 fails, the other can still cool the stator iron core unit 53 on the stator block 5 due to communication between the cooling regions 55 of the two cooling units 52. During a waiting period for maintenance, the generator can still generate power at a lower operation power, improving the economic benefits.

As shown in FIGS. 4 and 5, in one block body 51, two cooled air outlets 54 corresponding to two adjacent cooling units 52 are respectively located at the two axial end plates 511 at both sides of the block body 51. As shown in FIG. 1, a cavity 56 is defined and formed by the rotor support 4 and the axial end plate 511 of the block body 51, and the air expelled from the cooled air outlet 54 is guided through the cavity 56 to the stator iron core unit 53. Hence, the hot air of the two cooling units 52 is expelled from the cavities 56 at both sides shown in FIG. 1 respectively, thus fully utilizing the internal space.

As shown in FIG. 1, the cavity 56 is formed at both sides of the block body 51 respectively in this embodiment. The left cavity 56 is enclosed by a first sealing plate 41, a second rotor end plate 42 of the rotor support 4, an annular end plate 43 of the rotor support 4, and the left axial end plate 511 of the block body 51. The right cavity 56 is enclosed by a second sealing plate 46, a first rotor end plate 45 of the rotor support 4, the annular end plate 43 of the rotor support 4 and the right axial end plate 511 of the block body 51.

The hot air heated by the stator iron core unit 53 is cooled by the cooling unit 52 and finally flows back to the stator iron core unit 53 through the left and right cavities 56 formed by the rotor and the stator, and such cycle is repeated to satisfy the cooling requirements of the generator. Such air flow circuit design ensures the air flow will not run to the stator support 6. Under a same discharge capacity, the arrangement solution shortens the air flow circulating path, speeds up the circulation speed of the air flow and improves the cooling effect.

This embodiment further provides a cooling system for a stator assembly, where the stator assembly includes a stator support 6 and a plurality of stator blocks 5 circumferentially arranged on the stator support 6, each stator block 5 includes one block body 51 and one stator iron core unit 53. The cooling system includes a cooling unit 52 and a cooled air outlet 54, at least one cooling unit 52 is disposed inside each stator block 5, and at least one cooled air outlet 54 is disposed on the axial end plate 511 of each block body 51. The hot air heated by the stator iron core unit 53 is cooled by the cooling unit 52 and then expelled from the cooled air outlet 54. Preferably, the cooling system further includes a first flow guiding unit disposed inside each block bod 51 and the first flow guiding unit is used to guide the hot air heated by the stator iron core unit 53 to the cooling unit 52. In this embodiment, the first flow guiding unit is a mounting plate 513 for connecting the cooling unit 52 to the axial end plate 511 of the block body 51 in a sealed way.

The cooling system further includes a second flow guiding unit used to guide the air expelled from the cooled air outlet 54 to flow back to the stator iron core unit 53. Such cycle is repeated to satisfy the cooling requirements of the generator. In this embodiment, the second flow guiding unit includes a first sealing plate 41 and a second sealing plate 46 located below the bottom of the block body 51 and connected between the rotor support 4 and the stator support 6, so as to prevent the air flow expelled from the cooled air outlet 54 from running toward the fixed shaft 1.

The present disclosure improves the assembly efficiency; under a same discharge capacity, an air flow circulation path is shortened, a cooling circulation speed of an air flow is sped up and the cooling effect is improved; with sharing of redundant cooling, economic benefits are improved; with separation of the maintenance region and the electromagnetic region, operation and maintenance safety of the generator is improved, the structure is simplified, conveniences are provided to maintenance personnel for entry and exit, and the influence of the heat generated by the electromagnetic region on the main bearing is reduced, thus helping manufacture of the stator support.

Although the above descriptions are made to the specific embodiments of the present disclosure, those skilled in the art should understand that these embodiments are merely illustrative and the scope of protection of the present disclosure is defined by the appended claims. Those skilled in the art may make various changes or modifications to these embodiments without departing from the principle and essence of the present disclosure and all these changes and modifications shall fall within the scope of protection of the present disclosure.

## Claims

1. A stator block, **characterized in that**, the stator block comprises:
a block body, having two axial end plates, and a lateral end plate located between the two axial end plates, wherein a receiving cavity is enclosed and formed by the axial end plates and the lateral end plate, and a cooled air outlet is disposed on the axial end plate; and
a stator iron core unit, connected to a radial outer end surface of the block body;
wherein at least one cooling unit is disposed inside the receiving cavity of the block body, and hot air heated by the stator iron core unit is introduced into the cooling unit in which the hot air is cooled and then expelled from the cooled air outlet.

2. The stator block according to claim 1, **characterized in that**, the cooling unit is connected to the axial end plate and the lateral end plate of the block body through a mounting plate in a sealed way.

3. The stator block according to claim 1, **characterized in that**, the cooling unit comprises a heat exchanger and a blower,
the heat exchanger is disposed as facing toward the stator iron core unit, and
the heat exchanger with the blower, and the blower with the cooled air outlet both are guided and communicated through a ventilation channel.

4. The stator block according to claim 3, **characterized in** at least one of:
the heat exchanger and the blower are connected by an irregularly-shaped ventilation channel,
the blower and the cooled air outlet are connected by a flared ventilation channel.

5. The stator block according to claim 2, **characterized in that**,
the stator block is fan-shaped; and
a plurality of the stator block bodies are assembled into an annular stator ring.

6. The stator block according to claim 5, **characterized in that**,
one or more air flow communication openings are opened in the lateral end plate and located radially outward of the mounting plate, and
each of the air flow communication openings is in communication with a cooling region between each of the stator iron core units and each of the cooling units.

7. The stator block according to claim 1, **characterized in that**,
at least two cooling units are disposed inside each of the block bodies, and
cooling regions between the stator iron core unit and the at least two cooling units are mutually communicated.

8. The stator block according to claim 7, **characterized in that**, the cooled air outlets connected with adjacent cooling units are respectively located at the axial end plates at both sides of the block body.

9. A stator assembly, **characterized in that**, the stator assembly comprises:
a stator support; and
a plurality of stator blocks according to any one of claims 1-8 which are connected to the stator support.

10. The stator assembly according to claim 9, **characterized in that**,
the stator support comprises a maintenance region located inwardly from a radial inner end of the block body, and
each of the stator iron core units and a rotor magnetic pole of a generator are both isolated outside the maintenance region by each of the block bodies.

11. The stator assembly according to claim 9, **characterized in that**,
the stator assembly further comprises a sealing plate located radially and inwardly from the cooled air outlet; and
the sealing plate is connected between the stator support and a rotor support of the generator in a sealed way.

12. A cooling system for a stator assembly, comprising the stator assembly, wherein the stator assembly comprises a stator support and a plurality of stator blocks which are circumferentially-arranged and connected to a radial outer end of the stator support, the stator block is fan-shaped, a plurality of stator block bodies are assembled into an annular stator ring,
the cooling system is **characterized in that**,
each of the stator blocks comprises one block body and one stator iron core unit,
the block body is provided with two axial end plates and a lateral end plate located between the two axial end plates,
a receiving cavity is enclosed and formed by the axial end plates and the lateral end plate,
the cooling system comprises at least one cooling unit disposed inside the receiving cavity of each of the stator blocks, and at least one cooled air outlet disposed on the axial end plate of each of the block bodies.

13. The cooling system for the stator assembly according to claim 12, **characterized in that**,
the cooling system further comprises a first flow guiding unit disposed inside each of the block bodies, and
the first flow guiding unit is a mounting plate for connecting the cooling unit to the axial end plate and the lateral end plate of the block body in a sealed way.

14. The cooling system for the stator assembly according to claim 12 or 13, **characterized in that**, the stator assembly further comprises a second flow guiding unit which is a sealing plate located radially and inwardly from the cooled air outlet and connected between the stator support and a rotor support of a generator in a sealed way.

15. The cooling system for the stator assembly according to claim 12, **characterized in that**,
at least two cooling units are disposed inside each of the block bodies, and
cooling regions between the stator iron core unit and the at least two cooling units are communicated mutually.

16. The cooling system for the stator assembly according to claim 13, **characterized in that**,
the stator assembly further comprises one or more air flow communication openings which are opened in the lateral end plate and located radially outward of the mounting plate, and
each of the air flow communication openings is in communication with a cooling region between each of the stator iron core units and each of the cooling units.
